(19) Europäisches Patentamt / European Patent Office / Office européen des brevets

(11) **EP 2 343 202 A1**

(12) **EUROPEAN PATENT APPLICATION**

(43) Date of publication:
**13.07.2011 Bulletin 2011/28**

(51) Int Cl.:
**B60G 17/016** (2006.01)

(21) Application number: **11150675.4**

(22) Date of filing: **12.01.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (72) Inventors:<br>• **Takahashi, Susumu**<br>  **Saitama 351-0193 (JP)**<br>• **Kojima, Takeshi**<br>  **Saitama 351-0193 (JP)** |
| (30) Priority: **12.01.2010 JP 2010003809** | (74) Representative: **Herzog, Markus et al**<br>**Weickmann & Weickmann**<br>**Patentanwälte**<br>**Postfach 86 08 20**<br>**81635 München (DE)** |
| (71) Applicant: **Honda Motor Co., Ltd.**<br>**Tokyo 107-8556 (JP)** | |

(54) **Apparatus for determining turning vehicle condition**

(57)     An apparatus for quickly and accurately determining a counter steer state of a vehicle is provided. The apparatus comprises a turning direction obtaining unit 70 obtaining a turning direction of a vehicle, an oversteer state determination unit 71 determining whether the vehicle is in an over steer state, a steering angle based yaw rate obtaining unit 72 obtaining a steering angle based yaw rate to be determined based at least on a steering angle, a lateral acceleration based yaw rate obtaining unit 73 based at least on a lateral acceleration, a counter steer state determination unit 74 determining that the vehicle is in a counter steer state against the vehicle turning in the vehicle turning direction if the steering angle based yaw rate obtained by the steering angle based yaw rate obtaining unit 72 is smaller than the lateral acceleration based yaw rate obtained by the lateral acceleration based yaw rate obtaining unit 73 when the oversteer state determination unit 71 determines that the vehicle is in the oversteer state for the vehicle turning in the vehicle turning direction obtained by the turning direction obtaining unit 70.

FIG.2

## Description

Field of the Invention

The present invention relates to a technology to determine the condition of a vehicle that is turning.

Description of the Related Art

Japanese Unexamined Patent Application No. 2008-001144 discloses a suspension control apparatus that determines that a vehicle is in the counter steer state if vehicle body's moving direction is not in agreement with the steering direction of a steering unit of the vehicle.
In this application, a direction of a lateral acceleration or a yaw rate is used for vehicle body's movement direction.
When the steering unit is steered in an opposite direction to the vehicle turning direction to decrease the yaw rate of the turning vehicle, the steering angle is still determined to be in the same direction as the vehicle moving direction, that is, vehicle turning direction (for instance, the vehicle is turning left while the steering angle is on the left turning side), just after starting to steer the steering unit. In Japanese Unexamined Patent Application No. 2008-001144, the vehicle is not regarded as being in the counter steer state at this moment. Only if the vehicle moving direction is not in agreement with the steering angle (for instance, the vehicle is turning left while the steering angle is on the right turning side), the vehicle is determined to be in the counter steer state.
However as is described above, there ought to be a case in which the vehicle is to be regarded as being in the counter steer state even if the vehicle moving direction is in agreement with the steering angle. In the case of Japanese Unexamined Patent Application No. 2008-001144, the vehicle is determined to be in the counter steer state later than it ought to be and occupants on the vehicle might feel odd about vehicle's steering state.
Taking into the account the above mentioned, the present invention is intended to provide the apparatus for determining turning vehicle condition that determine more accurately and quickly a vehicle being in the counter steer state.

SUMMARY OF THE INVENTION

In order to achieve the objective above mentioned, the apparatus of the present invention determines that the vehicle is in the counter steer state if a steering angle based yaw rate is smaller than a lateral acceleration based yaw rate after the vehicle is determined to becomes in an oversteer state while the vehicle is turning.
According to the present invention, it is quickly and accurately determined whether a vehicle is in the counter steer state.

BRIEF DESCRIPTION OF THE DRAWINGS

Fig.1 is a system block diagram indicating a basic principle of the apparatus for determining turning vehicle condition of the present invention.

Fig. 2 is a system block diagram for the apparatus for determining turning vehicle condition of the present invention.

Fig.3 is a flowchart explaining how a counter steer state is determined.

Fig.4 is a counter steer determination time chart indicating when a counter steer state is determined.

DETAILED DESCRIPTION OF THE PREFERRED EMBODIMENT

Hereinafter is explained an embodiment to practice the present invention with reference to appropriate drawings attached to this specification when needed.

<< STRUCTURE >>

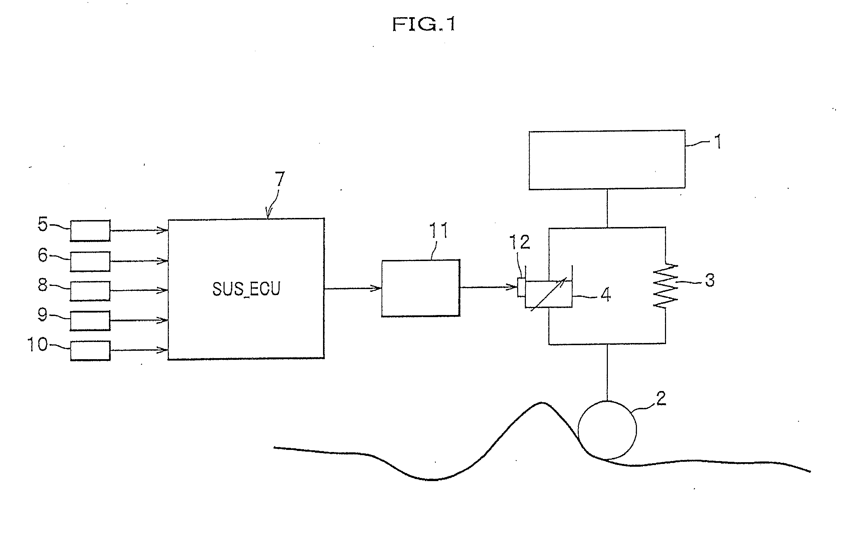

Fig. 1 indicates schematically a basic principle of the apparatus for determining turning vehicle condition.
A sign 1 in Fig.1 indicates a body of a vehicle, of which a typical example is an automobile vehicle. There are springs 3 and reversible damping force type shock-absorbers 4 whose damping force is variably controlled (hereinafter referred to as "shock-absorbers 4"), both of which are disposed in parallel with one another between the body 1 and four wheels. The vehicle body 1 is supported by these springs 3 and shock-absorbers 4, which constitute variable damping force dampers.
A vertical acceleration sensor ( vertical G sensor) 6, which measures an acceleration ( sprung mass acceleration ) a corresponding to movement of the vehicle 1 in the vertical direction in the absolute coordinate system, is secured onto the vehicle body 1.
Roll applied to the vehicle 1 is detected based on the sprung mass accelerations a measured with the vertical acceleration sensors 6 in this embodiment.
If there are two vertical acceleration sensors, one of which is attached in the vicinity of a front or rear wheel on vehicle's right side and the other of which is attached in the vicinity of a front or rear wheel on vehicle's left side, it is possible to detect roll on the vehicle body.
Therefore, in this embodiment, there are three vertical acceleration sensors 6 attached on the vehicle body, a couple of them disposed on a diagonal line of the vehicle body, one in the vicinity of the front-right wheel and the other in the vicinity of the rear-left wheel, and the other added to constitute a triangle of the three vertical acceleration sensors 6, so that not only roll but also bouncing and pitching are detected.

Then the sign 7 indicates a suspension control unit ( referred to as "SUS_ECU" hereinafter in which ECU stands for Electrical Control Unit) to control the variable damping force damper. This SUS_ECU is mainly constituted by a microcomputer inclusive of CPU ( Central Processing Unit ), ROM ( Read Only Memory ), RAM ( Random Access Memory ) and such nonvolatile memory means as EEPROM ( Electrically Erasable Programmable ROM ), all of which are commonly used.

With the input terminal of this SUS_ECU 7 are connected a yaw rate sensor 5 to measure the yaw rate γ applied to the vehicle (indicating an actual yaw rate if a yaw rate is described simply as "γ", and hereinafter referred to as yaw rate ), vertical acceleration sensors 6 above mentioned ( only one vertical acceleration sensor 6 is shown in Fig.1 as representative one), a lateral acceleration sensor 8 ( lateral G sensor, corresponding to a lateral acceleration obtaining unit ) that is applied to the vehicle body 1 and measures a lateral acceleration Gy applied to the vehicle body 1, a vehicle velocity sensor 9 to measure a vehicle velocity V ( corresponding to vehicle velocity obtaining unit), and a steering angle sensor 10 that is attached to the steering unit and detects a steering angle δ.

In the present embodiment, the lateral acceleration Gy and the steering angle δ, both of which are measured while a vehicle is turning left, are described as positive (+) values. Then, the lateral acceleration Gy and the steering angle δ, both of which are measured while a vehicle is turning right, are described as negative (-) values.

Moreover, an actuator 12 ( for example, linear solenoid ) to drive the above mentioned shock-absorber 4 is connected with an output terminal of this SUS_ECU 7 through a driver circuit 11.

The SUS_ECU 7 controls the damping force property of the shock-absorber 4 according to a control method that approximates the sky-hook-damper theory based control method that is well-known.

This shock-absorber control is performed in the following way. For instance, when the shock-absorber 4 has a low damping force property ( soft ) in its compressed state, the damping force property of the shock-abosorber 4 in its extended state is regulated between a high damping force property ( hard ) and the low damping force property ( soft ). When the shock-absorber 4 has the low damping force property in its extended state, the damping force property of the shock-absorber 4 in the compressed state is regulated between the low damping force property ( soft ) and the high damping force property ( hard). There is a case of both of the damping force properties in the compressed and extended states of the shock-absorber 4 being set to the low damping force. Thus the damping force property of the shock-absorber 4 in the compressed state can be made opposite to that of the shock-absorber 4 in the extended state.

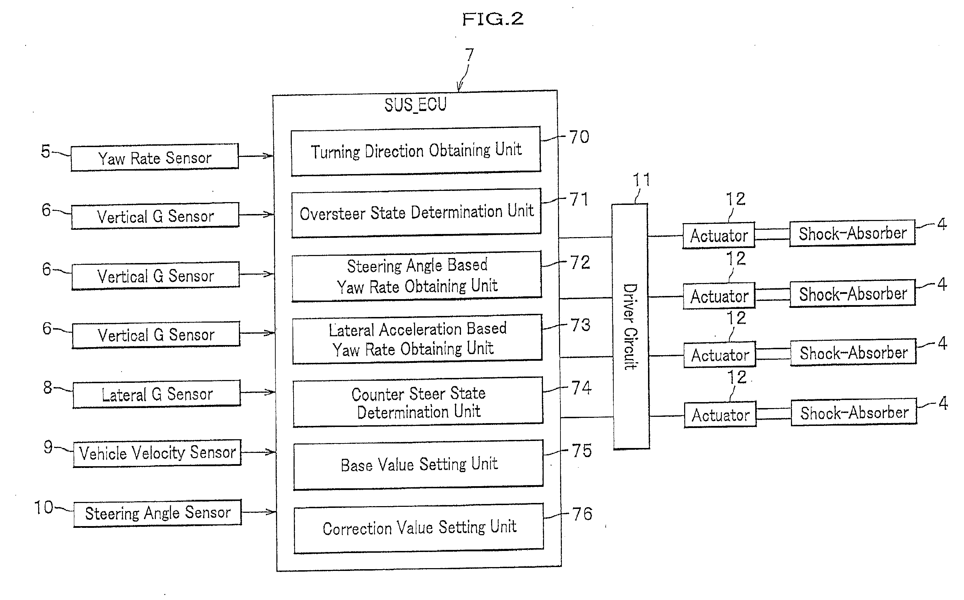

As is shown in the system block diagram of the apparatus for determining turning vehicle condition of the present invention in Fig.2, SUS_ECU 7 outputs a driver signal ( of current ) such as a duty signal to each actuator 12 through a driver circuit 11 in order to optimize damping coefficients of the shock-absorber 4 on the basis of an input signal sent from each vertical acceleration sensor 6, and performs such suspension control as making high the damping coefficient on each shock absorber 4 that is in either the compressed state or the extended state, which corresponds to the direction of the sprung mass velocity and making low the damping coefficient on the shock absorber 4 in the other state that corresponds to the opposite direction to the sprung mass velocity, in order to suppress roll when the roll is detected.

Moreover, when SUS_ECU 7 determines that the vehicle is in the counter steer state, SUS_ECU 7 performs suspension control according to the features of the present invention, and there is a case, for instance, in which the current suspension control is maintained without any change.

A detailed explanation on SUS_ECU 7 is given below. SUS_ECU 7 is provided with functional units inclusive of a turning direction obtaining unit 70, an oversteer state determination unit 71, a steering angle based yaw rate obtaining unit 72, a lateral acceleration based yaw rate obtaining unit 73, a counter steer state determination unit 74, a base value setting unit 75 and a correction value setting unit 76.

The turning direction obtaining unit 70 obtains a vehicle turning direction in which a vehicle is turning and determines whether the vehicle is turning left or right. In order to obtain the turning direction, the turning direction obtaining unit 70 uses a yaw rate γ measured

The oversteer state determination unit 71 determines whether the vehicle is in the oversteer state or not and performs this determination, for instance, by making use of a determination result in accordance with a determination equation of the yaw rate γ and the steering angle based yaw rate $\gamma_{dr}$ that is to be explained later ( Details are given in Japanese Unexamined Patent Application 2008-044555 ).

The steering angle based yaw rate obtaining unit 72 obtains the steering angle based yaw rate $\gamma_{dr}$ that is determined based on the steering angle δ measured by the steering angle sensor 10 and the vehicle velocity V measured by the vehicle velocity sensor 9. The steering angle based yaw rate $\gamma_{dr}$ can be obtained, for instance, with reference to a map that indicates a correlation between the steering angle δ and the steering angle based yaw rate $\gamma_{dr}$ and is stored in a storage device In this specification, there are cases in which the steering angle based yaw rate is referred to as a driver requested yaw rate, for the purpose of easy understanding.

The lateral acceleration based yaw rate obtaining unit 73 obtains the lateral acceleration based yaw rate $\gamma_{gl}$ that is determined based on the lateral acceleration Gy measured by the lateral acceleration sensor 8 and the vehicle velocity V measured by the vehicle velocity sensor 9. The lateral acceleration based yaw rate $\gamma_{gl}$ can be obtained, for instance, by dividing the lateral acceleration Gy measured by the lateral acceleration sensor 8 by the vehicle velocity V measured by the vehicle velocity sensor 9. The lateral acceleration based yaw rate $\gamma_{gl}$ can be obtained with reference to a map that indicates a correlation between the lateral acceleration Gy and the lateral acceleration based yaw rate $\gamma_{gl}$ and is stored in the storage device. In this specification, there are cases in which the lateral acceleration based yaw rate is referred to as a locus angle rate, for the purpose of easy understanding.

The counter steer state determination unit 74 makes use of the vehicle turning direction obtained by the turning direction obtaining unit 70, the oversteer state obtained by the oversteer state determination unit 71, the steering angle based yaw rate $\gamma_{dr}$ obtained by the steering angle based yaw rate obtaining unit 72 and the lateral acceleration based yaw rate $\gamma_{gl}$ obtained by the lateral acceleration based yaw rate obtaining unit 73, and determines whether the vehicle is in the counter steer state or not. The details on how this is determined is explained later.

The base value setting unit 75 sets a target damping force base value (standard value ) for the variable damping force damper according to vehicle's moving condition ( running condition ). The target damping force base value can be set, for instance, with reference to a map that indicates a correlation between the steering angle $\delta$, at least one of the yaw rate $\gamma$ corresponding to vehicle's moving condition and the lateral acceleration Gy, and the target damping force base value and is stored in the storage device.

The correction value setting unit 76 sets a damping force correction value that is taken into account as well as the target damping force base value for the target damping force, on the basis of at least the counter steer state determined by the counter steer state determination unit 74. This damping force correction value is utilized with the target damping force base value and may be added to or subtracted from the target damping force base value. Calculation with the damping force correction value may be performed after it is multiplied or divided by a predetermined weighted coefficient SUS_ECU 7 calculates a target damping force by correcting the target damping force base value set by the base value setting unit 75 with the damping force correction value set by the correction value setting unit 76, and performs control of the variable damping force damper.

<< PROCEDURE >>

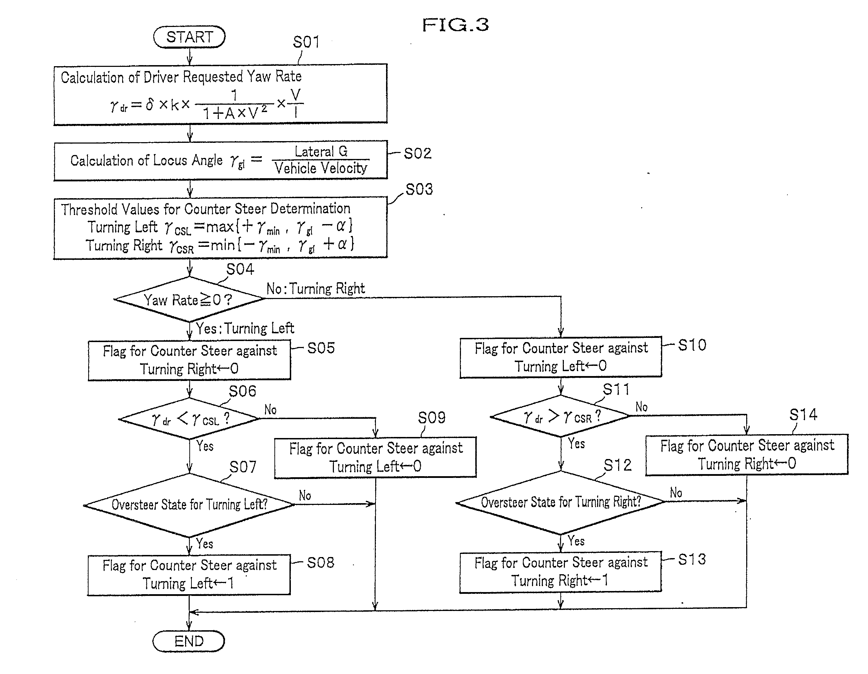

Next is explained on the procedure performed by SUS_ECU 7, especially on the procedure to determine the counter steer state. Fig.3 is a flowchart indicating how the counter steer state is determined. What is actually performing the procedure in this flowchart may be, for instance, a CPU of SUS_ECU 7, or a CPU of the other ECU that is connected with and capable of communicating with SUS_ECU 7 through CAN ( Controller Area Network ) communication. This procedure is carried out periodically.

Firstly calculation of the driver requested yaw rate $\gamma_{dr}$ is carried out at the step S01. For instance, the following equation is used for this calculation.

$$\gamma_{dr} = \delta - k \cdot ( 1 / ( 1 + A \cdot V^2 ) ) \cdot ( V / l )$$

Where k, A and l denote respectively a steering gear ratio of the vehicle, a stability factor, and a wheel base, and all of these parameters are determined according to vehicle's design. Alternatively the driver requested yaw rate $\gamma_{dr}$ may be obtained from the steering angle based yaw rate obtaining unit 72 by referring to the corresponding map stored in the storage device. The following step S02 is to be carried out after the driver requested yaw rate $\gamma_{dr}$ is calculated.

Secondly calculation of the locus angle rate $\gamma_{gl}$ is carried out at the step S02. As has been explained, use is made of the following equation for this calculation.

$$\gamma_{gl} = Gy / V$$

Subsequently the step S03 is to be carried out after the calculation of the locus angle rate $\gamma_{gl}$ is finished.

Calculation of threshold values for determining the counter steer state is carried out at the step S03. The threshold value for determining the counter steer state against turning left is denoted by $\gamma_{CSL}$ and the threshold value for determining the counter steer state against turning right is denoted by $\gamma_{CSR}$. $\gamma_{CSL}$ and $\gamma_{CSR}$ are calculated according to the following equations.

$$\gamma_{CSL} = \max \{ + \gamma_{min}, \gamma_{gl} - \alpha \}$$

$$\gamma_{CSR} = \min \{ - \gamma_{min}, \gamma_{gl} + \alpha \}$$

where the signs indicated in the above equations are predefined in such a manner that the sign for the vehicle turning left is positive ( + ) while the sign for the vehicle turning right is negative ( - ). $\gamma_{min}$ and $\alpha$ are arbitrarily determined positive values. Subsequently the step S04 is to be carried out after the calculation of the threshold values for determining the counter steer state is finished.

It is determined whether the yaw rate $\gamma$ is larger

than or equal to 0 or not. If the yaw rate $\gamma$ is larger than or equal to 0 ( that is, Yes at the step S04 corresponding to the vehicle turning left ), the vehicle is turning left. This means that the vehicle is determined as turning left and that the step S05 is to be carried out. On the other hand, If he yaw rate $\gamma$ is smaller than or equal to 0 ( that is, No at the step S04 corresponding to the vehicle turning right ), the vehicle is turning right. This means that the vehicle is determined as turning right and that the step S10 is to be carried out.

0 is substituted into a flag for counter steer against turning right at the step S05. The flag for counter steer against turning right indicates whether the counter steer state against the vehicle turning right is effected or not. If the flag for counter steer against turning right is "0", it is determined that the counter steer state against the vehicle turning right is not effected. If the flag for counter steer against turning right is "1", it is determined that the counter steer state against the vehicle turning right is effected. If the driver in the vehicle was performing counter steer against turning right before the step S05 is carried out, it is determined that the counter steer against turning right is over after the vehicle is beginning to turn left. Subsequently the step S06 is to be carried out after 0 is substituted into the flag for counter steer against turning right.

At the step S06, it is determined whether the driver requested yaw rate $\gamma_{dr}$ is smaller than the counter steer state against turning left $\gamma_{CSL}$ or not. If $\gamma_{dr}$ is smaller than $\gamma_{CSL}$ ( Yes at the step S06 ), the step S07 is to be carried out. On the other hand, if $\gamma_{dr}$ is not smaller than $\gamma_{CSL}$ ( No at the step S06 ), the step S09 is to be carried out.

At the step S07, it is determined whether the vehicle is in the oversteer state for turning left or not, that is, whether the vehicle is in the oversteer state for turning left or not while the vehicle is turning left. If the vehicle is in the oversteer state for turning left ( Yes at the step S07 ), the step S08 is to be carried out.

On the other hand, if the vehicle is not in the oversteer state ( No at the step S07 ), it is determined that the driver has not yet performed the counter steer against turning left ( for instance, the vehicle has just begun turning left and is not in the oversteer state ) and the whole procedure is made to end.

At the step S08, 1 is substituted into a flag for counter steer against turning left. The flag for counter steer state against the vehicle turning left indicates whether the counter steer state against the vehicle turning left is effected or not.

If the flag for counter steer state against turning left is "0", it is determined that the counter steer state against the vehicle turning left is not effected. On the other hand, if the flag for counter steer state against turning left is "1", it is determined that the counter steer state against the vehicle turning left is effected. The whole procedure is made to end after 1 is substituted into the flag for counter steer against turning left.

At the step S09, 0 is substituted into the flag for counter steer state against turning left. That is, it is determined at this moment that the driver has not performed counter steer operation against turning left ( for instance, the driver keeps the steering wheel turned left without returning it toward a neutral position to drive the vehicle continuously turning left.) The whole procedure is made to end after 0 is substituted into the flag for counter steer against turning left.

At the step S10, 0 is substituted into the flag for counter steer against turning left. That is, if the driver was performing counter steer against turning left before this moment, it is determined that the counter steer against turning left is over after the vehicle beginning to turn right. Subsequently the step S11 is to be carried after 0 is substituted into the flag for counter steer against turning left.

At the step S11, it is determined whether the driver requested yaw rate $\gamma_{dr}$ is larger than the counter steer state against turning right $\gamma_{CSR}$, or not. If $\gamma_{dr}$ is larger than $\gamma_{CSR}$ (Yes at the step S11 ), the step S12 is to be carried out. On the other hand, if $\gamma_{dr}$ is not larger than $\gamma_{CSR}$, the step S14 is to be carried out.

At the step S12, it is determined whether the vehicle is in the oversteer state for turning right, that is, whether the vehicle is in the oversteer state for turning right while the vehicle is turning right.

If the vehicle is in the oversteer state for turning right ( Yes at the step S12 ), the step S13 is to be carried out. On the other hand, if the vehicle is not in the oversteer state for turning right ( No at the step S12 ), it is determined that the driver has not performed counter steer operation against turning right ( for instance, the vehicle has just begun turning right and is not in the oversteer state ) and the whole procedure is made to end.

At the step S13, is substituted into the flag for counter steer against turning right. Subsequently the whole procedure is made to end after 1 is substituted into the flag for counter steer against turning right.

At the step S14, 0 is substituted into the flag for counter steer against turning right. That is, it is determined at this moment that the driver has not performed counter steer operation against turning right ( for instance, the driver keeps the steering while turned right without returning it toward the neutral position to drive the vehicle continuously turning right ). Subsequently the whole procedure is made to end after 0 is substituted into the flag for counter steer against turning right.

The above mentioned is the explanation on how the counter steer state is determined is finished

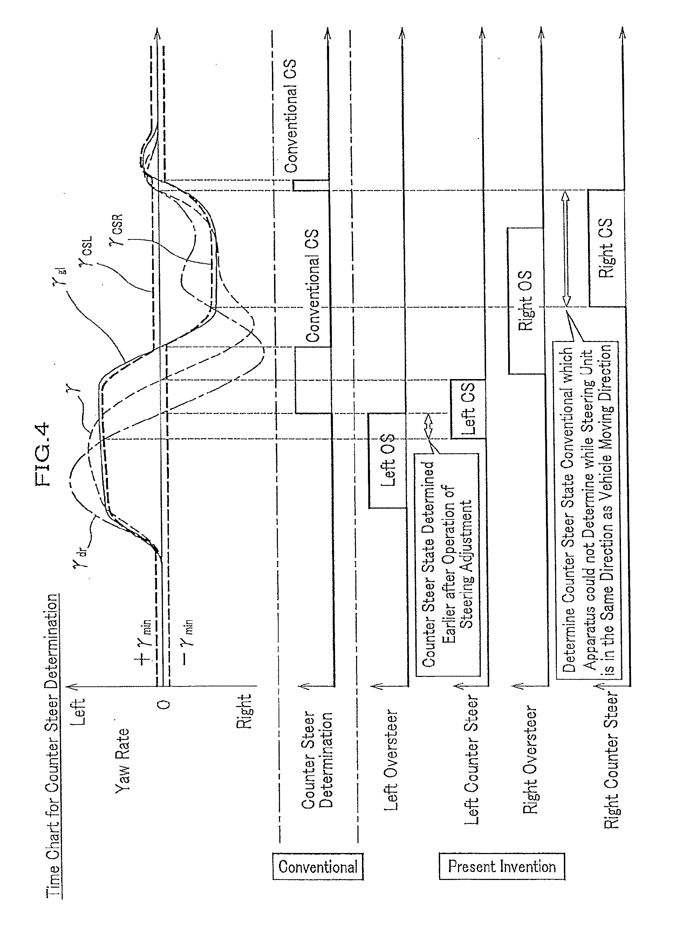

Fig.4 is a time chart indicating when the counter steer state is determined.

It is assumed that the driver requested yaw rate $\gamma_{dr}$, the yaw rate $\gamma$ and the locus angle yaw rate $\gamma_{gl}$ change due to some sort of steering wheel operation being performed by the driver. Both the threshold values for determining counter steer $\gamma_{CSL}$, $\gamma_{CSR}$ are indicated with dotted lines.

The conventional apparatus determines that the vehicle is in the counter steer state if the vehicle moving direction is not in agreement with the direction in which the steering unit is steered. That is, as indicated in Fig.4, it is determined by the conventional apparatus that while the yaw rate $\gamma$ corresponding to the vehicle moving direction is in the left direction ( + ), the counter steer state ( denoted by "Conventional CS" in Fig.4 ) begins the moment the driver requested yaw rate $\gamma_{dr}$, which corresponds to operation of the steering wheel, changes from the left direction ( + ) to the right direction (-).

Moreover it is determined by the conventional apparatus that while the yaw rate $\gamma$ is in the right direction (-), the counter steer state begins the moment the driver requested yaw rate $\gamma_{dr}$, which corresponds to operation of the steering wheel, changes from the right direction (-) to the left direction ( + ).

As is explained in the flow chart of Fig.3, it is determined according to the present invention that while the vehicle is in the oversteer state for turning left ( "Left OS" in Fig.4 ), the counter steer state against turning left ( indicated by "Left CS" in Fig.4 ) begins the moment the driver requested yaw rate $\gamma_{dr}$ becomes smaller than the threshold value for determining counter steer state against turning left $\gamma_{CSL}$,

"Left CS" starts earlier than the corresponding "Conventional CS". Moreover this determination on the counter state is reasonable because it is determined whether the vehicle is in the oversteer state or not.

Therefore controlling the variable damping force damper in accordance with the counter steer state is performed quicker and more accurately according to the present invention. That is, when the driver operates the steering wheel for adjusting the vehicle moving direction, the counter state is determined earlier than the conventional apparatus for determining vehicle turning condition.

This is also the case with the counter steer state against turning right ( indicated by "Right CS" in Fig.4 ) in the oversteer state for turning right ( indicated by "Right OS" in fig.4 ).

With the present invention above mentioned, it is possible to determine the counter steer state that the conventional apparatus could not determine while the steering unit is still in the same direction as the vehicle moving direction.

<< SUMMARY >>

The apparatus for determining vehicle turning condition of the present embodiment gives rise to the following effects.

Firstly it is determined earlier that the driver is about to perform the counter steer operation with the steering wheel if vehicle's oversteer state is determined, even if the steering angle direction is still in the same direction as the vehicle turning direction. Therefore it is possible to quickly obtain steering stability of the vehicle as is desired when controlling the steering stability of the vehicle on the basis of the determination on the counter steer state.

Secondly it is possible to accurately determine the vehicle turning condition because of using $\gamma_{gl}$, which corresponds to vehicle's revolution velocity, for the threshold values for determining counter steer state $\gamma_{CSL}$, $\gamma_{CSR}$.

Lastly it is possible to apply a signal indicating the vehicle being in the counter steer state to setting the correction value for the target damping force of the variable damping force damper and early secure the steering stability, because the signal can be obtained at the earlier timing in the phase of each of various yaw rates.

<< OTHER REMARK >>

Although the above described embodiment is desirable for practicing the present invention, the embodiments of the present invention should not be limited to this embodiment. Naturally it is possible to modify the embodiments of the present invention without deviating from the scope of the present invention.

For instance, the locus angle rate $\gamma_{gl}$, which corresponds to a vehicle's revolving velocity, is used for the threshold values for determining counter steer state $\gamma_{CSL}$, $\gamma_{CSR}$. However the actual yaw rate corresponding to an angular rotation velocity may be used instead of the locus angle rate $\gamma_{gl}$.

Moreover, SUS_ECU 7 in the present embodiment controls the damping force property of the shock-absorber 4 according to the control method that approximates the sky-hook-damper theory based control method. Howvever, it is also possible to apply the determination of the counter steer state according to the present embodiment to the control method based other theory.

Furthermore, specific constituents of hardware or software included in the present embodiment can be replaced with compatible constituents without deviating the scope of the present invention.

An apparatus for quickly and accurately determining a counter steer state of a vehicle is provided. The apparatus comprises a turning direction obtaining unit 70 obtaining a turning direction of a vehicle, an oversteer state determination unit 71 determining whether the vehicle is in an over steer state, a steering angle based yaw rate obtaining unit 72 obtaining a steering angle based yaw rate to be determined based at least on a steering angle, a lateral acceleration based yaw rate obtaining unit 73 based at least on a lateral acceleration, a counter steer state determination unit 74 determining that the vehicle is in a counter steer state against the vehicle turning in the vehicle turning direction if the steering angle based yaw rate obtained by the steering angle based yaw rate obtaining unit 72 is smaller than the lateral acceleration based yaw rate obtained by the lateral acceleration based yaw rate obtaining unit 73 when the oversteer state determination unit 71 determines that the vehicle is in the oversteer state for the vehicle turning in the vehicle turning direction obtained by the turning direction obtaining unit 70.

**Claims**

1. An apparatus for determining turning vehicle condition comprising,
   a turning direction obtaining unit obtaining a turning direction of a vehicle,
   an oversteer state determination unit determining whether the vehicle is in an oversteer state,
   a steering angle based yaw rate obtaining unit obtaining a steering angle based yaw rate to be determined based at least on a steering angle,
   a lateral acceleration based yaw rate based at least on a lateral acceleration,
   a counter steer state determination unit determining that the vehicle is in a counter steer state against the vehicle turning in the vehicle turning direction if the steering angle based yaw rate obtained by the steering angle based yaw rate obtaining unit is smaller than the lateral acceleration based yaw rate obtained by the lateral acceleration based yaw rate obtaining unit, when the oversteer state determination unit determines that the vehicle is in the oversteer state for the vehicle turning in the vehicle turning direction obtained by the turning direction obtaining unit.

2. The apparatus for determining turning vehicle condition further comprising,
   a control device controlling a variable damping force damper for damping vibration of the vehicle relative to a wheel,
   a base value setting unit setting a target damping force base value based on a moving condition of the vehicle, and
   a correction value setting unit setting a damping force correction value based the counter state on the vehicle determined by the counter steer state determination unit,
   wherein a target damping force is calculated by correcting the target damping force base value with the damping force correction value.

FIG.1

FIG.2

## FIG.3

START — S01

Calculation of Driver Requested Yaw Rate

$$\gamma_{dr} = \delta \times k \times \frac{1}{1 + A \times V^2} \times \frac{V}{l}$$

Calculation of Locus Angle $\gamma_{gl} = \dfrac{\text{Lateral G}}{\text{Vehicle Velocity}}$ — S02

Threshold Values for Counter Steer Determination — S03
Turning Left $\gamma_{CSL} = \max\{+\gamma_{min},\ \gamma_{gl} - \alpha\}$
Turning Right $\gamma_{CSR} = \min\{-\gamma_{min},\ \gamma_{gl} + \alpha\}$

S04 — Yaw Rate $\geq 0$ ?

No: Turning Right

Yes: Turning Left

Flag for Counter Steer against Turning Right ← 0 — S05

Flag for Counter Steer against Turning Left ← 0 — S10

S06 — $\gamma_{dr} < \gamma_{CSL}$ ?  No

S11 — $\gamma_{dr} > \gamma_{CSR}$ ?  No

Yes

Yes

S09 — Flag for Counter Steer against Turning Left ← 0

S14 — Flag for Counter Steer against Turning Right ← 0

S07 — Oversteer State for Turning Left?  No

S12 — Oversteer State for Turning Right?  No

Yes

Yes

Flag for Counter Steer against Turning Left ← 1 — S08

Flag for Counter Steer against Turning Right ← 1 — S13

END

## FIG.4

Time Chart for Counter Steer Determination

Left

Yaw Rate

$\gamma_{dr}$    $\gamma$    $\gamma_{gl}$    $\gamma_{CSL}$    $\gamma_{CSR}$

$+\gamma_{min}$

0

$-\gamma_{min}$

Right

**Conventional**

Counter Steer Determination

Conventional CS    Conventional CS

**Present Invention**

Left Oversteer

Left OS

Left Counter Steer

Counter Steer State Determined Earlier after Operation of Steering Adjustment

Left CS

Right Oversteer

Right OS

Right Counter Steer

Determine Counter Steer State Conventional which Apparatus could not Determine while Steering Unit is in the Same Direction as Vehicle Moving Direction

Right CS

Europäisches
Patentamt

European
Patent Office

Office européen
des brevets

# EUROPEAN SEARCH REPORT

Application Number

EP 11 15 0675

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 2009 179293 A (HONDA MOTOR CO LTD) 13 August 2009 (2009-08-13) * abstract; claim 1; figures 1-9 * * paragraphs [0007], [0020] * ----- | 1,2 | INV. B60G17/016 |
| Y | JP 2002 096652 A (MITSUBISHI MOTORS CORP) 2 April 2002 (2002-04-02) * abstract; figures 1-5 * * paragraphs [0004] - [0009], [0024] - [0025], [0044] - [0045] * ----- | 1,2 | |
| A | EP 1 627 764 A1 (HONDA MOTOR CO LTD [JP]) 22 February 2006 (2006-02-22) * paragraphs [0007], [0023] - [0034]; figures 1-6 * ----- | 1,2 | |
| A | EP 1 201 519 A1 (MAZDA MOTOR [JP]; SUMITOMO ELECTRIC INDUSTRIES [JP]) 2 May 2002 (2002-05-02) * paragraphs [0053], [0070] - [0079], [0137] - [0152]; figures 1,7 * ----- | 1,2 | |
| A | US 2006/197377 A1 (TAKAHASHI SUSUMU [JP] ET AL) 7 September 2006 (2006-09-07) * paragraphs [0019] - [0020], [0027] - [0032]; figures 1-7 * ----- | 1,2 | TECHNICAL FIELDS SEARCHED (IPC) B60G B60W |
| A | JP 2009 227220 A (HONDA MOTOR CO LTD) 8 October 2009 (2009-10-08) * abstract; figures 1-8 * ----- | 1,2 | |

The present search report has been drawn up for all claims

| Place of search | Date of completion of the search | Examiner |
|---|---|---|
| The Hague | 8 April 2011 | Cavallo, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 15 0675

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2011

| Patent document cited in search report | | Publication date | Patent family member(s) | | Publication date |
|---|---|---|---|---|---|
| JP 2009179293 | A | 13-08-2009 | NONE | | |
| JP 2002096652 | A | 02-04-2002 | JP 3915871 | B2 | 16-05-2007 |
| EP 1627764 | A1 | 22-02-2006 | DE 602005000975 | T2 | 17-01-2008 |
| | | | JP 2006057730 | A | 02-03-2006 |
| | | | US 2006041357 | A1 | 23-02-2006 |
| EP 1201519 | A1 | 02-05-2002 | DE 60116228 | T2 | 24-08-2006 |
| | | | ES 2255532 | T3 | 01-07-2006 |
| | | | JP 2002127887 | A | 09-05-2002 |
| | | | US 2002082762 | A1 | 27-06-2002 |
| US 2006197377 | A1 | 07-09-2006 | JP 4530880 | B2 | 25-08-2010 |
| | | | JP 2006240496 | A | 14-09-2006 |
| JP 2009227220 | A | 08-10-2009 | NONE | | |

EPO FORM P0459

For more details about this annex : see Official Journal of the European Patent Office, No. 12/82

**REFERENCES CITED IN THE DESCRIPTION**

**Patent documents cited in the description**

- JP 2008001144 A

- JP 2008044555 A